# EUROPÄISCHE PATENTSCHRIFT

(11) **EP 2 226 473 B1**
(45) Veröffentlichungstag und Bekanntmachung des Hinweises auf die Patenterteilung: **24.08.2016**
(21) Anmeldenummer: 10001674.0
(22) Anmeldetag: 18.02.2010
(51) Int. Cl.: F01D 11/24, F01D 25/14, F02C 7/06, F02C 7/18, F02K 3/04, F02C 9/18

(54) **Luftleitelement eines Laufspalteinstellungssystems einer Fluggasturbine**
Air scoop of a system for tip clearance adjustment of an aero gas turbine
Elément déflecteur d'air d'un système de réglage du jeu des extrémités des aubes d'une turbine à gaz d'avion

(30) Priorität: 04.03.2009 DE 102009011635
(43) Veröffentlichungstag der Anmeldung: 08.09.2010
(73) Patentinhaber: Rolls-Royce Deutschland Ltd & Co KG, 15827 Blankenfelde-Mahlow (DE)
(72) Erfinder: Todorovic, Predrag, 10437 Berlin (DE); Herzog, Stephan, 12307 Berlin (DE); Seydel, Christian, 14532 Stahnsdorf (DE)
(74) Vertreter: Hoefer & Partner Patentanwälte mbB

(56) Entgegenhaltungen:
- EP-A2- 1 916 185
- GB-A- 2 183 296
- GB-A- 2 442 310

## Beschreibung

Die Erfindung bezieht sich auf ein Luftleitelement, welches bei einem Laufspalteinstellungssystem einer Fluggasturbine verwendet wird, um Kühlluft aus einem Nebenstromkanal in einem Kerntriebwerklüftungsraum einzuleiten.

Im Einzelnen bezieht sich die Erfindung auf ein Luftleitelement einer Verkleidung eines Kerntriebwerks einer Gasturbine, durch welches Luft aus einer Nebenströmung zu mehreren Kühlluftverteilern zugeführt wird.

Aus dem Stand der Technik ist es bekannt, Kühlluft zur aktiven Laufspaltkontrolle aus einem Nebenstromkanal abzuzweigen und zur Kühlung der Wandung eines Turbinengehäuses zu verwenden.

Zum Stand der Technik wird auf die US 2007/0140839 A1 und die US 2007/0140838 A1 sowie die US 2007/245711 A1 verwiesen.

Zur Einleitung von Kühlluft ist es erforderlich, diese strömungsgünstig aus dem Nebenstromkanal aufzunehmen und strömungsorientiert durch die Verkleidung des Kerntriebwerklüftungsraums radial nach innen zu leiten.

Die GB 2 183 296 A offenbart eine Konstruktion, bei welcher ein Sekundärluftanteil über in unmittelbarer Nähe der betreffenden Turbinengehäusestruktur angeordnete Öffnungen in der Innenwandstruktur des Sekundärkanals entnommen und gezielt gegen Turbinengehäusestrukturen ausgeblasen wird.

Aus der EP 1 916 185 A2 ist es bekannt, mittels einer Lufthutze in Form eines Pitot-Einlasses Luft von der Außenwand eines Flugzeuges zu entnehmen.

Der Erfindung liegt die Aufgabe zugrunde, ein Luftleitelement der eingangs genannten Art zu schaffen, welches eine strömungsoptimierte Kühllufteinleitung ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Das erfindungsgemäße Luftleitelement (scoop) zeichnet sich durch eine Reihe erheblicher Vorteile aus. Es ist insbesondere in optimaler Weise dafür geeignet, eine Gas- oder Fluidströmung als Teilströmung aus einer anderen Strömung zu entnehmen, ohne dass sich hierbei große Strömungsverluste ergeben würden.

Demgemäß ist das erfindungsgemäße Luftleitelement nicht nur für die beschriebene aktive Laufspalteinstellung verwendbar, sondern bei allen Anwendungen, bei welchen Teil-Fluidströmungen zum Kühlen, Heizen oder zu anderen Zwecken zu entnehmen sind.

Erfindungsgemäß ergibt sich durch die Ausgestaltung des Luftleitelements eine strömungsgünstige Strömungsführung, welche geringe Druck- und Strömungsverluste aufweist. Dies insbesondere in der beschriebenen Kombination zweier zu entnehmender Fluidströmungen, welche praktisch an einem gleichen Ort aus einer Hauptströmung zu entnehmen sind.

Weiterhin erweist es sich erfindungsgemäß als besonders günstig, dass das Luftleitelement in einfacher Weise gefertigt werden kann und aus einer geringen Zahl von Einzelteilen besteht. Somit vereinfacht sich der Herstellungsprozess. Insgesamt ergibt sich ein geringes teilgewicht. Auch die Wartungskosten sind, bedingt durch den einfachen Aufbau, gering, da praktisch kein Wartungsaufwand besteht.

Erfindungsgemäß sind somit zwei Strömungskanäle einander zugeordnet, wobei ein erster, rohrförmiger Strömungskanal vorgesehen ist, welcher sich durch die Wandung oder Verkleidung erstreckt, sowie ein zweiter Strömungskanal, welcher den ersten Strömungskanal zumindest teilweise umschließt und dessen Einströmöffnung in Strömungsrichtung von der Einströmöffnung des ersten Strömungskanals rückversetzt ist. Dies führt zu dem günstigen Effekt, dass sich die beiden Einströmöffnungen und die sich hierbei ergebenden Beeinträchtigungen der ursprünglichen Gesamtströmung nicht negativ gegenseitig beeinträchtigen. Vielmehr kann eine ungestörte Einströmung durch beide Einströmöffnungen erfolgen, es treten keine Verwirbelungen oder Ablösungen der Strömung auf.

Durch die erfindungsgemäße Lösung, dass der zweite Strömungskanal den ersten Strömungskanal zumindest teilweise umgreift oder umschließt, kann für beide Strömungskanäle ein effektiver und wirksamer Strömungsquerschnitt geschaffen werden, der die Hauptströmung nur minimal beeinträchtigt und ein wirksames Abführen der jeweiligen Teilströmungen gewährleistet.

Im Folgenden wird die Erfindung anhand eines Ausführungsbeispiels in Verbindung mit der Zeichnung beschrieben. Dabei zeigt:
- Fig. 1: eine vereinfachte axiale Teil-Schnittansicht einer Fluggasturbine unter Verwendung des erfindungsgemäßen Luftleitelements,
- Fig. 2, 3: eine perspektivische Darstellung des erfindungsgemäßen Luftleitelements,
- Fig. 4, 5: eine Draufsicht auf die Darstellung gemäß den Fig. 2 und 3,
- Fig. 6: eine vereinfachte Längs-Schnittansicht des gezeigten Ausführungsbeispiels,
- Fig. 7: eine Radial-Schnittansicht längs der Linie Y-Y von Fig. 6,
- Fig. 8: eine vereinfachte Seiten-Schnittansicht, insbesondere der Darstellung der Fig. 6, und
- Fig. 9: eine perspektivische Unteransicht.

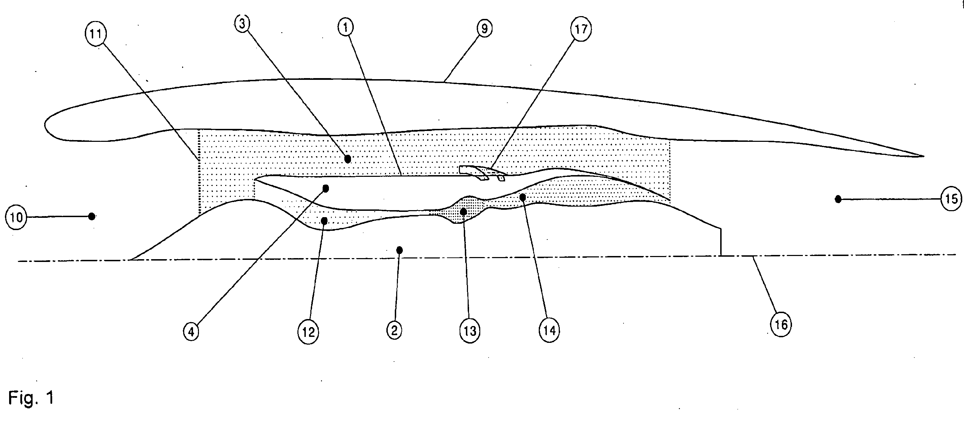

Die Fig. 1 zeigt in schematischer Darstellung eine Triebwerksgondel 9 mit einem Einlauf 10, in welchem ein Fan angeordnet ist. Die austretende Strömung des Fans 11 gelangt in einen Nebenstromkanal 4 sowie zu einem Kompressor 12 eines Kerntriebwerks 2, welches eine Brennkammer 13 sowie eine Turbine 14 umfasst. Die aus der Turbine 14 sowie dem Nebenstromkanal 3 austretende Strömung wird eine Schubdüse 15 zugeführt. Das Bezugszeichen 16 beschreibt eine Triebwerksachse.

Zwischen dem Kerntriebwerk 2 und dem Nebenstromkanal 3 ist ein Kerntriebwerklüftungsraum 4 ausgebildet, welcher radial nach außen durch eine Verkleidung 1 begrenzt wird. Die Verkleidung 1 wird durchgriffen von einem Luftleitelement 17, durch welches Kühlluft, wie beschrieben, zur Kühlung des Laufspalts durch Kühlung einer im Einzelnen nicht dargestellten Wandung eines Turbinengehäuses zugeführt wird.

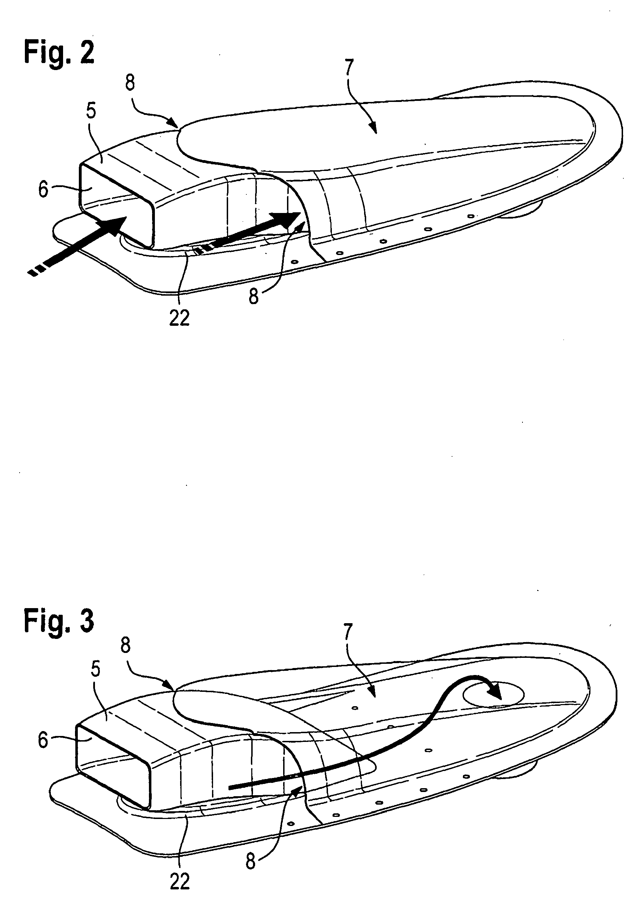

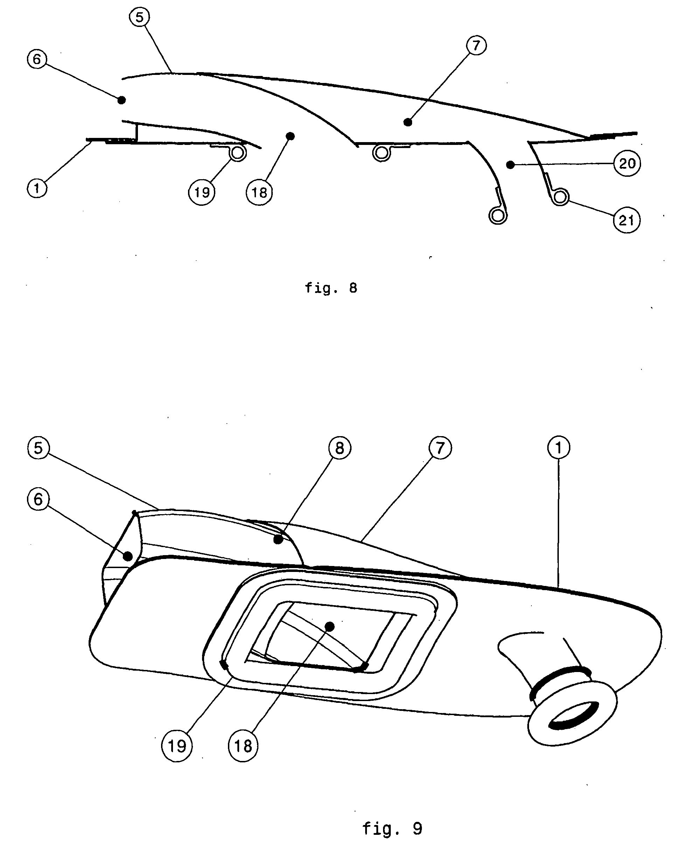

Die Fig. 2-5 zeigen ein erfindungsgemäßes Ausführungsbeispiel des Luftleitelements 17. Dieses umfasst einen ersten Strömungskanal 5, welcher eine im Wesentlichen rechteckige Querschnittsform aufweist und mit einer ebenfalls im Wesentlichen rechteckigen Einströmöffnung 6 versehen ist, die sich in dem Nebenstromkanal 3 befindet. Der erste Strömungskanal 5 erstreckt sich mit im Wesentlichen gleichbleibendem Querschnitt bogenförmig nach unten und mündet in einer im Wesentlichen rechteckigen Austrittsöffnung 18, welche von einer Dichtung 19 umgeben sein kann (siehe Fig. 8 und 9).

Ein zweiter Strömungskanal 7 umgreift oder umschließt den ersten Strömungskanal 5. Seine beiden seitlichen Eintrittsöffnungen 8 sind in axialer Richtung bzw. in Strömungsrichtung zurückversetzt, so wie sich dies beispielsweise aus den Fig. 2 und 3 ergibt. Der zweite Strömungskanal ist somit gabelförmig aufgebaut, die einlaufende Strömung umschließt den ersten Strömungskanal 5 beidseitig und vereinigt sich dann, um durch eine Austrittsöffnung 20, die ebenfalls an einer Dichtung 21 umschlossen werden kann, auszuströmen.

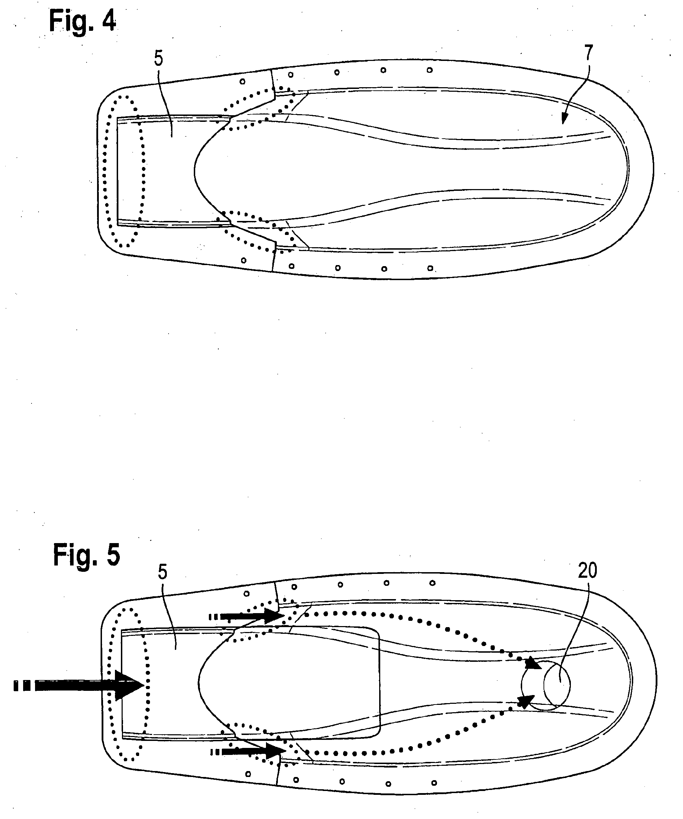

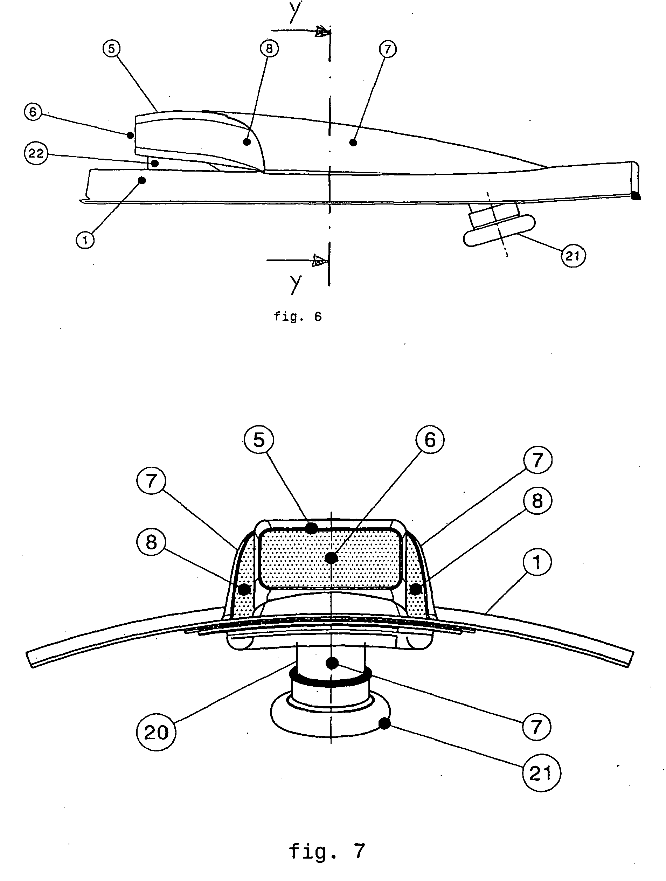

Insbesondere die Fig. 2-5 zeigen die jeweiligen Strömungswege. Die Fig. 2 zeigt mit den beiden Doppelpfeilen die Einströmung in den ersten Strömungskanal 5 sowie in eine Seite des zweiten Strömungskanals 7 durch dessen seitliche Eintrittsöffnung 8 (siehe auch Fig. 7). Die Fig. 3 zeigt die Vereinigung der beiden Teilströmungen, welche durch die beiden seitlichen Eintrittsöffnungen 8 in den zweiten Strömungskanal 7 eingetreten sind. Die Fig. 4 zeigt in der Draufsicht die Einströmbereiche des ersten Strömungskanals 5 sowie die beiden seitlichen Einströmbereiche in den zweiten Strömungskanal 7. Die Strömungsführung ist in Fig. 5 nochmals verdeutlicht.

Die Fig. 3, 6 und 8 zeigen weiterhin, dass der erste Strömungskanal 5 im Bereich seiner Einströmöffnung 6 von der Oberfläche der Verkleidung 1 beabstandet ist. Dies wird erreicht durch ein strömungsgünstig geformtes Distanzelement 22, so dass der Einlauf in die Einströmöffnung 6 nicht durch Randeffekte und Reibungseffekte der Verkleidung 1 beeinträchtigt wird.

### Bezugszeichenlisie

- 1: Verkleidung
- 2: Kerntriebwerk
- 3: Nebenstromkanal
- 4: Kerntriebwerklüftungsraum
- 5: erster Strömungskanal
- 6: Einströmöffnung
- 7: zweiter Strömungskanal
- 8: Eintrittsöffnung
- 9: Triebwerksgondel
- 10: Einlauf
- 11: Fan
- 12: Kompressor
- 13: Brennkammer
- 14: Turbine
- 15: Schubdüse
- 16: Triebwerksachse
- 17: Luftleitelement
- 18: Austrittsöffnung
- 19: Dichtung
- 20: Austrittsöffnung
- 21: Dichtung
- 22: Distanzelement

## Patentansprüche

1. Luftleitelement einer Verkleidung (1) eines Kerntriebwerks (2) einer Fluggasturbine, durch welches Luft aus einer Nebenströmung in einen Nebenstromkanal (3) zu mehreren Kühlluftverteilern in einem Kerntriebwerklüftungsraum (4) einleitbar ist, wobei das Luftleitelement (17) zum Durchgreifen der Verkleidung (1) konfiguriert ist und einen ersten rohrförmigen Strömungskanal (5) umfasst, dessen Einströmöffnung (6) im eingebauten Zustand des Luftleitelements (17) von der Oberkante der Verkleidung (1) beabstandet und in dem Nebenstromkanal (3) angeordnet ist und welcher sich im eingebauten Zustand durch die Verkleidung (1) erstreckt; das Luftleitelement ist **dadurch gekennzeichnet, daß** es einen zweiten rohrförmigen Strömungskanal (7) umfasst, welcher den ersten Strömungskanal (5) zumindest teilweise umschließt und dessen Einströmöffnung (8) in Strömungsrichtung zu der Einströmöffnung (6) des ersten Strömungskanals (5) rückversetzt ist.

2. Luftleitelement nach Anspruch 1, **dadurch gekennzeichnet, dass** der erste Strömungskanal (5) im Wesentlichen einen rechteckigen Querschnitt aufweist.

3. Luftleitelement nach einem der Ansprüche 1 oder 2, **dadurch gekennzeichnet, dass** die zweite Einströmöffnung (8) seitlich der ersten Einströmöffnung (6) angeordnet ist.

4. Luftleitelement nach einem der Ansprüche 1 bis 3, **dadurch gekennzeichnet, dass** der zweite Strömungskanal (7) schalenförmig einen in Strömungsrichtung hinteren Bereich des ersten Strömungskanal (5) übergreifend ausgebildet ist.

5. Luftleitelement nach einem der Ansprüche 1 bis 4, **dadurch gekennzeichnet, dass** der erste Strömungskanal (5) in axialer Richtung vor dem zweiten Strömungskanal (7) durch die Verkleidung (1) mündet.

## Claims

1. Scoop of a fairing (1) of a core engine (2) of an aircraft gas turbine through which air can be supplied from a bypass flow in a bypass duct (3) to several cooling-air distributors in a core-engine ventilation compartment (4), where the scoop (17) is configured for passing through the fairing (1) and includes a first tubular flow duct (5), whose inlet opening (6) in the installed condition of the scoop (17) is at a distance from the upper edge of the fairing (1) and arranged in the bypass duct (3) and which extends in the installed condition through the fairing (1); the scoop is **characterized in that** it includes a second tubular flow duct (7), which at least partly encompasses the first flow duct (5) and whose inlet opening (8) is backwardly offset relative to the inlet opening (6) of the first flow duct (5) in the direction of flow.

2. Scoop in accordance with Claim 1, **characterized in that** the first flow duct (5) has an essentially rectangular cross-section.

3. Scoop in accordance with one of the Claims 1 or 2, **characterized in that** the second inlet opening (8) is arranged at the side of the first inlet opening (6).

4. Scoop in accordance with one of the Claims 1 to 3, **characterized in that** the second flow duct (7) is of shell-type design, covering a rearward part of the first flow duct (5), as seen in the direction of flow.

5. Scoop in accordance with one of the Claims 1 to 4, **characterized in that** the first flow duct (5) issues through the fairing (1) upstream of the second flow duct (7) in the axial direction.

## Revendications

1. Élément de guidage d'air d'un carénage (1) d'un coeur de moteur (2) d'une turbine à gaz aéronautique, à travers lequel de l'air provenant d'un flux secondaire dans un canal de flux secondaire (3) peut être guidé vers plusieurs distributeurs d'air de refroidissement dans un espace de ventilation (4) du coeur de moteur, sachant que l'élément de guidage d'air (17) est configuré pour passer à travers le carénage (1) et comprend un premier canal d'écoulement (5) tubulaire, dont l'orifice d'admission (6) à l'état monté de l'élément de guidage d'air (17) est distant du bord supérieur du carénage (1) et placé dans le canal de flux secondaire (3), et qui s'étend à travers le carénage (1) à l'état monté; l'élément de guidage d'air est **caractérisé en ce qu'**il comprend un deuxième canal d'écoulement (7) tubulaire qui entoure au moins partiellement le premier canal d'écoulement (5) et dont l'orifice d'admission (8) est en retrait dans le sens d'écoulement par rapport à l'orifice d'admission (6) du premier canal d'écoulement (5).

2. Élément de guidage d'air selon la revendication n° 1, **caractérisé en ce que** le premier canal d'écoulement (5) présente une section transversale pour l'essentiel rectangulaire.

3. Élément de guidage d'air selon une des revendications n° 1 ou n° 2, **caractérisé en ce que** le deuxième orifice d'admission (8) est disposé latéralement par rapport au premier orifice d'admission (6).

4. Élément de guidage d'air selon une des revendications n° 1 à n° 3, **caractérisé en ce que** le deuxième canal d'écoulement (7) est conçu en forme de coque recouvrant une zone postérieure dans le sens d'écoulement du premier canal d'écoulement (5).

5. Élément de guidage d'air selon une des revendications n° 1 à n° 4, **caractérisé en ce que** le premier canal d'écoulement (5) débouche à travers le carénage (1) en amont du deuxième canal d'écoulement (7) dans le sens axial.
